# EUROPÄISCHE PATENTSCHRIFT

(11) **EP 1 387 092 B1**
(45) Veröffentlichungstag und Bekanntmachung des Hinweises auf die Patenterteilung: **04.05.2005**
(21) Anmeldenummer: 03014978.5
(22) Anmeldetag: 02.07.2003
(51) Int. Cl.: F16B 13/00, F16B 13/12, F16B 13/06

(54) **Dübel mit wirkungsmässig kombinatorisch verzahnten Dübelkörpern**
Dowel with combined toothed-dowel-bodies
Cheville avec des corps des chevilles dentés combiné

(30) Priorität: 10.07.2002 DE 20210717 U
(43) Veröffentlichungstag der Anmeldung: 04.02.2004
(73) Patentinhaber: B + D Technologie Beteiligungs GmbH & Co. KG, 76227 Karlsruhe (DE)
(72) Erfinder: Blatt, Hans Peter, 76833 Frankweiler (DE)
(74) Vertreter: Ratzel, Gerhard, Dr.

(56) Entgegenhaltungen:
- EP-A- 0 922 863
- US-A- 4 086 840
- US-A- 4 834 601

## Beschreibung

Gegenstand vorliegender Erfindung ist ein Dübel mit wirkungsmässig kombinatorisch verzahnten Dübelkörpern, der aus einem Dübelkörper aus einem durch innere Druckanwendung blähbaren Material und einem kopfseitig angeordneten Haubenkörper aus demgegenüber hartem Material besteht, wobei im Innern des Haubenkörpers ein Kanal angeordnet ist, in welchen eine Dübelschraube einschraubbar ist, wobei erfindungsgemäß der walzenförmige Haubenkörper aus relativ hartem Material auf den walzenförmigen Dübelkörper aus weicherem Material austauschbar aufgesetzt ist.

Der erfindungsgemäße Dübel ist insbesondere in Bohrlöcher von Wänden einsetzbar, deren Durchmesser etwas größer oder auch wesentlich größer ist als der Dübeldurchmesser vor seinem Funktionsendzustand. Es ist also erfindungsgemäß möglich, den neuen Dübel auch in zu verdübelnde Löcher einzusetzen, bei denen die Anwendung der herkömmlichen Spreizdübel nicht mehr oder nur schwierig möglich ist.

Der walzenförmige Dübelkörper aus weichem Material ist vorzugsweise pyramidenstumpfartig ausgebildet, wobei vorzugsweise am Pyramidenstumpfende der walzenförmige Haubenkörper angeordnet ist. Die beiden Dübelkörper können einstückig in Verbindung stehen; der Haubenkörper kann nach einer anderen Ausführungsform auf den weicheren Dübelkörper aufgesetzt sein.

Zum nächstkommenden Stand der Technik wird das deutsche Gebrauchsmuster 200 02 801.4 genannt, in dem ein Dübel mit Innen- und Außenwalze beschrieben ist, wobei dieser Dübel des nächstkommenden Standes der Technik aus einer Innenwalze aus hartem Material und einer Außenwalze aus dem gegenüber weichem Material besteht und die Innenwalze in der Weise in die Außenwalze eingesetzt ist, dass die bauseitig innen angeordneten Grundflächen der beiden Walzen fest miteinander verbunden sind und in der Innenwalze ein Kanal angeordnet ist.

Für besondere Anwendungszwecke hat sich jedoch herausgestellt, dass der erfindungsgemäße Dübel noch einen gewerbsmäßigen Vorteil bietet, dergestalt, dass der walzenförmige Haubenkörper aus relativ hartem Material auf dem walzenförmigen Dübelkörper aus dehnbarem weicheren Material austauschbar aufgesetzt ist.

Dies stellt gegenüber dem Stand der Technik einen sprunghaften Fortschrittsaspekt dar.

Bei Kenntnis des Dübels gemäß Gebrauchsmuster 200 02 801.4, erkennt der Fachmann, dass der beim Dübel des Gebrauchsmusters 200 02 801.4 als Außenwalze bezeichnete Dübelteil hinsichtlich seiner Position zum walzenförmigen Haubenkörper nunmehr als Innenwalze bezeichnet werden kann, wohingegen der walzenförmige Haubenkörper aus hartem Material bei vorliegender Erfindung nunmehr als Außenwalze bezeichenbar ist.

Zum Stand der Technik ist die USA-Patentschrift 4,086,840 zu nennen, die einen hohlen Wanddübel beschreibt, der im wesentlichen aus einem konischen Elastomer-Material besteht, das bei seiner Anwendung, also beim longitudinalen Komprimieren infolge Einschraubens eines Bolzens mit Gewinde fähig ist, zu kollabieren, d.h. in sich zusammenzufallen, ähnlich wie ein Faltenbalg bei dessen Komprimieren. Damit ist das Funktionsprinzip dieses Wanddübels gerade entgegengesetzt dem Funktionsprinzip des erfindungsgemäßen Dübels mit wirkungsmäßig kombinatorisch verzahnten Dübelkörpern, weil dieser durch innere Druckanwendung dehnbar und mithin blähbar ist.

Der walzenförmige Dübelkörper aus dehnbarem Material besteht vorzugsweise aus weichem Kunststoffmaterial, beispielsweise aus weichem Polyethylen oder weichem Gummimaterial.

Der walzenförmige haubenartig ausgebildete Körper aus hartem Material besteht vorzugsweise aus Polyamid.

Der walzenförmige Dübelkörper aus weichem Material weist an der Endseite, die dem Haubenkörper entgegengesetzt ist, beispielsweise einen Kragen und/oder einen überstehenden Rand auf, der als Abschlusselement des in ein Bohrloch eingesetzten Dübels dient.

Nach einer weiteren bevorzugten Ausführungsform weist ferner der walzenförmige Dübelkörper aus weicherem Material nach außen stehende Rippen auf.

Nach einer weiteren besonders bevorzugten Ausführungsform weist der Dübelkörper aus weicherem Material an seiner Außenseite Längs-Sicken mit halbkreisförmigem Querschnitt auf. Diese Sicken haben vorzugsweise einen halbkreisförmigen Querschnitt und werden auch als "Schläuche" bezeichnet.

Das Wesen vorliegender Erfindung ist in den beiliegenden Abbildungen weiterhin erläutert.

In diesen Abbildungen sind bevorzugte Ausführungsformen des Erfindungsgegenstandes dargestellt.

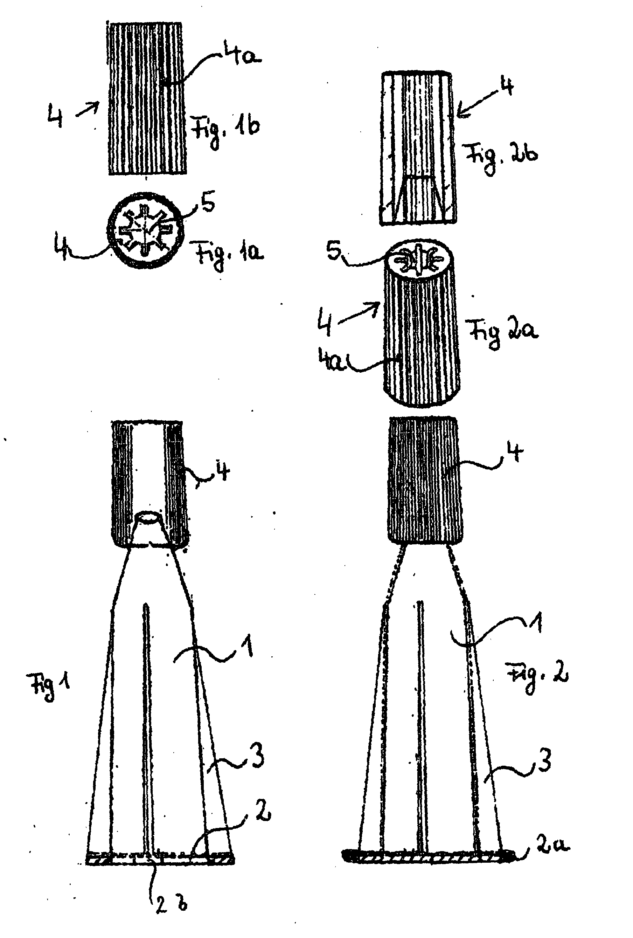

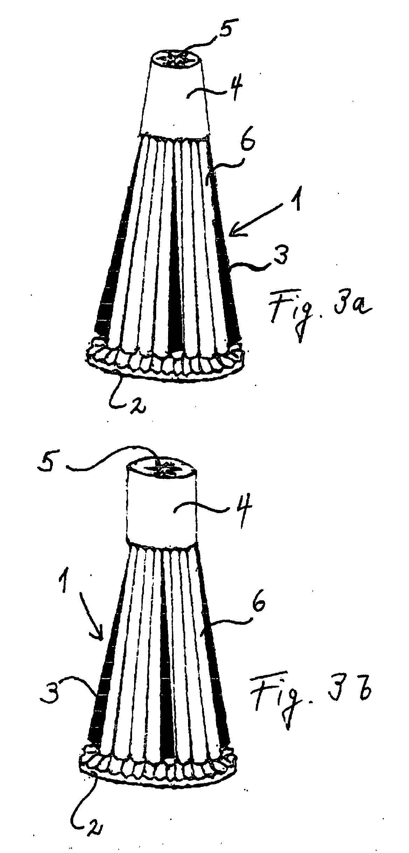

In Figur 1 ist der walzenförmige Dübelkörper aus weicherem Material mit dem Bezugszeichen 1 bezeichnet. Er besitzt pyramidenförmige Gestalt und weist an seinem unteren breiteren Ende eine kreisförmige Abdeckplatte 2 mit zentraler Lochung 2b zur Einführung einer Dübelschraube auf. An der Außenwandung des pyramidenstumpfartigen walzenförmigen Dübelkörpers 1 sind mehrere Rippen 3 vorhanden, die sowohl eine stabilisierende als auch eine das Dübelloch teilweise ausfüllende Funktion aufweisen.

Auf das schmalere Ende des walzenförmigen Dübelkörpers 1 ist der aus härterem Material (im Vergleich zum Material des walzenförmigen Dübelkörpers 1) bestehende Haubenkörper 4 aufgesetzt.

In Figur 1 a ist ein Querschnitt durch den walzenförmigen Haubenkörper 4 dargestellt, der aus Vollmaterial besteht und in seinem Innern den sogenannten Sternkanal 5 aufweist, der nach oben offen ist.

In Figur 1 b ist nochmals eine Seitenansicht des walzenförmigen Haubenkörpers 4 in Alleinstellung gezeichnet.

In Figur 2 ist eine weitere Ausführungsform des Erfindungsgegenstandes gezeichnet, bei der der walzenförmige Dübelkörper 1 einen Abschlussrand 2 a aufweist, der deutlich über die Breite übersteht, die durch den weitesten Abstand der vorhandenen Rippen 3 definiert ist. Hierdurch wird ein besonders starker Anpressdruck an die Dübellochwandung beim Erzielen des Bläheffekts (Expansionseffekts) in-folge der erfindungsgemäßen Anwendung des neuen Dübels erreicht. Gleichzeitig erfolgt durch den breiteren Abschluss 2 a in Gestalt einer Abschlussplatte ein ebenfalls erwünschter zusätzlicher Abdichteffekt.

Die übrigen Elemente der Figur 2 entsprechen den in Figur 1 dargestellten Elementen.

Figur 2 a zeigt halbperspektivisch gezeichnet den walzenförmigen Haubenkörper 4 aus härterem Material (Vollmaterial) mit eingefrästem oder auf analoge Weise hergestellten Kanal 5 (Sternkanal).

Figur 2 b zeigt einen senkrechten Innenschnitt des walzenförmigen Haubenkörpers 4.

In Figur 3a ist der Erfindungsgegenstand in der Ausführungsform gezeigt, bei der an der Außenwand des weicheren Dübelkörpers 1 halbkreisförmige Längs-Sicken 6 angeordnet sind. Mit dem Bezugszeichen 3 sind wiederum Rippen bezeichnet. In dieser Figur 3 a ist der Haubenkörper 4 von pyramidenstumpfartiger Gestalt. Der darin befindliche Sternkanal ist wiederum mit der Bezugsziffer 5 bezeichnet.

In der Figur 3 b ist eine analoge Ausbildung der Erfindung, wie in Figur 3 a dargestellt mit der Abänderung, dass der Haubenkörper 4 walzenförmig ausgebildet ist.

In beiden Figuren 3a und 3 b ist der Kragen am unteren Ende des Dübelkörpers 1 wiederum mit dem Bezugszeichen 2 gekennzeichnet, wobei sich die Längs-Sicken bis an den unteren Bereich des Kragens 2 erstrecken.

Im folgenden wird nun die Funktion und speziell die Anwendung des erfindungsgemäßen Dübels erläutert:

Der Gesamtdübel, bestehend aus dem walzenförmigen Dübelkörper 1 aus weicherem Material und dem aufgesetzten Haubenkörper 4 aus demgegenüber härterem Material, wird in ein beispielsweise um mehrere Millimeterbeträge weiteres Bohrloch in einem Mauerwerk eingesetzt und sodann eine (nichtgezeichnete) Dübelschraube in den sternförmigen Kanal 5 (Sternkanal) in der Weise eingeschraubt, dass sich im Sternkanal ein Schraubengang bildet. Die Entstehung dieses Schraubengangs ist beendet, sobald die Dübelschraube den Endbereich des Sternkanals erreicht hat.

Um nun den erwünschten sehr festen Halt des erfindungsgemäßen Dübels im Mauerloch oder in einem sonstigen Dübelloch zu bewirken, wird nunmehr die Dübelschraube über das Ende des Sternkanals hinaus weiter gedreht mit folgendem Ergebnis:

Der Haubenkörper 4 (Blähkörper) führt in Richtung des Dübelkörpers 1 eine Rückwärtsbewegung durch und zwingt durch diese Rückwärtsbewegung den flexiblen weichen und damit "aufblähbaren" Dübelkörper 1 unter gleichzeitiger Verkürzung zu einer bedeutenden Querschnittsvergrößerung, wodurch automatisch ein Ausfüllen des gegebenenfalls wesentlich weiteren Dübellochs im Mauerwerk und mithin ein sehr fester Sitz des walzenförmigen Dübelkörpers 1 im Dübelloch erzielt wird.

Die Verankerung des Dübels im Dübelloch wird gegebenenfalls durch die Anordnung der Rippen 3 noch verstärkt.

Nach einer weiteren bevorzugten Ausführungsform kann der walzenförmige Haubenkörper 4 eine scharfe Rillung, die mit dem Bezugszeichen 4 a gekennzeichnet ist, aufweisen; diese bevorzugtermaßen scharfe Rillung 4 a begünstigt noch den oben geschilderten Stauchvorgang.

Die nach dieser bevorzugten Ausführungsform geriffelte Mantelfläche bewirkt also bei der Rückwärtsbewegung des Dübelkörpers 4 eine Erhöhung des Kraftschlusses zum Dübelloch und damit eine Verstärkung des oben beschriebenen Expansionseffekts (Bläheffekts).

An Stelle des Kanals (5) kann gegebenenfalls im Haubenkörper (4) ein Schraubengang angeordnet sein.

## Patentansprüche

1. Dübel mit wirkungsmässig kombinatorisch verzahnten Dübelkörpern, der aus einem Dübelkörper (1) aus einem durch innere Druckanwendung blähbaren Material und einem kopfseitig angeordneten Haubenkörper (4) aus demgegenüber hartem Material, besteht, wobei im Innern des Haubenkörpers (4) ein Kanal (5) angeordnet ist, in welchen eine Dübelschraube einschraubbar ist,
**dadurch gekennzeichnet,**
**dass** der walzenförmige Haubenkörper (4) aus relativ hartem Material auf den walzenförmigen Dübelkörper (1) aus weicherem Material austauschbar aufgesetzt ist.

2. Dübel nach Anspruch 1
**dadurch gekennzeichnet,**
**dass** der Dübelkörper (1) und der Haubenkörper (4) aus Kunststoffmaterial bestehen.

3. Dübel nach Anspruch 1 - 2,
**dadurch gekennzeichnet,**
**dass** der Haubenkörper (4) zumindest teilweise aus Vollmaterial besteht.

4. Dübel nach Anspruch 1 - 3,
**dadurch gekennzeichnet,**
**dass** der walzenförmige Haubenkörper (4) aus Vollmaterial besteht und in seinem Innern einen sogenannten Sternkanal (5) aufweist, der kopfseitig offen ist.

5. Dübel nach Anspruch 1 - 4,
**dadurch gekennzeichnet,**
**dass** der walzenförmige Dübelkörper (1) aus weichem Material an der Endseite, die dem Haubenkörper (4) entgegengesetzt ist, einen Kragen (2) und/oder einen überstehenden Rand aufweist, der als Abschlusselement des in ein Bohrloch eingesetzten Dübels dient.

6. Dübel nach Anspruch 1 - 5,
**dadurch gekennzeichnet,**
**dass** der walzenförmige Dübelkörper (1) aus weicherem Material eine pyramidenförmige Gestalt aufweist und an seinem unteren breiteren Ende eine kreisförmige Abdeckplatte (2) mit zentraler Lochung (2b) zur Einführung einer Dübelschraube aufweist.

7. Dübel nach Anspruch 6,
**dadurch gekennzeichnet,**
**dass** die Abdeckplatte (2) eine mittige Lochung aufweist.

8. Dübel nach Anspruch 1 - 7,
**dadurch gekennzeichnet,**
**dass** der walzenförmige Dübelkörper (1) aus weicherem Material auf seiner Außenseite nach außen stehende Rippen aufweist.

9. Dübel nach Anspruch 1 - 8,
**dadurch gekennzeichnet,**
**dass** der Dübelkörper (1) aus weicherem Material an seiner Außenseite Sicken (6) aufweist.

10. Dübel nach Anspruch 9,
**dadurch gekennzeichnet,**
**dass** die Sicken (6) Längs-Sicken sind.

11. Dübel nach Anspruch 9 - 10,
**dadurch gekennzeichnet,**
**dass** die Sicken (6) einen halbkreisförmigen Querschnitt aufweisen.

12. Dübel nach Anspruch 1 - 11,
**dadurch gekennzeichnet,**
**dass** der Haubenkörper (4) walzenförmig ausgebildet ist.

13. Dübel nach Anspruch 1 - 11,
**dadurch gekennzeichnet,**
**dass** der Haubenkörper (4) pyramidenstumpfartig ausgebildet ist.

14. Dübel nach Anspruch 1 - 13,
**dadurch gekennzeichnet,**
**dass** der Dübelkörper (1) aus weicherem Material walzenförmig ausgebildet ist.

15. Dübel nach Anspruch 1 - 13 ,
**dadurch gekennzeichnet,**
**dass** der Dübelkörper (1) auch weicherem Material pyramidenstumpfartig ausgebildet ist.

16. Dübel nach Anspruch 1 - 15,
**dadurch gekennzeichnet,**
**dass** der Kanal (5) als Schraubengang ausgebildet ist.

## Claims

1. Plug consisting of plug bodies that are interlocked and combined to achieve maximum effect. It includes a plug body (1) made from material that inflates when internal pressure is applied, and a cap (4) at its upper end, which is made of rigid material. The cap centre features a channel (5) into which a plug screw can inserted,
**characterised in that**
the cylindrical cap (4) made from relatively rigid material is attached to the cylindrical plug body (1) made of more flexible material in such a way that it can be replaced.

2. Plug according to claim 1,
**characterised in that**
the plug body (1) and the cap (4) are made of plastic.

3. Plug according to claim 1 - 2,
**characterised in that**
the cap (4) is, at least in part, made of solid material.

4. Plug according to claim 1 - 3,
**characterised in that**
the cylindrical cap (4) is made of solid material and features a star-shaped channel inside, the upper face of which is open.

5. Plug according to claim 1 - 4,
**characterised in that**
the cylindrical plug body (1) made of flexible material features a collar (2) and/or a overlapping rim on the bottom end opposite the cap (4), which serves to close the drill hole into which the plug is inserted.

6. Plug according to claim 1 - 5,
**characterised in that**
the cylindrical plug body (1) made of more flexible material is shaped like a pyramid and its lower and wider end features a clrcular covering plate (2) with a central hole (2b) into which a plug screw can be inserted.

7. Plug according to claim 6,
**characterised in that**
the covering plate (2) has an axial hole.

8. Plug according to claim 1- 7
**characterised in that**
the cylindrical plug body (1) made of more flexible material features protruding ribs on its outer side.

9. Plug according to claim 1 - 8,
**characterised in that**
the plug body (1) made of more flexible material features beads (6) on its outer side.

10. Plug according to claim 9,
**characterised in that**
the beads (6) are longitudinal beads.

11. Plug according to claim 9 - 10,
**characterised in that**
the beads (6) have a semicircular cross profile.

12. Plug according to claim 1 - 11,
**characterised in that**
the cap (4) is of cylindrical shape.

13. Plug according to claim 1 - 11,
**characterised in that**
the cap (4) is shaped like a truncated pyramid.

14. Plug according to claim 1 - 13,
**characterised in that**
the plug body (1) made of more flexible material is of cylindrical shape.

15. Plug according to claim 1 - 13,
**characterised in that**
the plug body (1) made of more flexible material is shaped like a truncated pyramid.

16. Plug according to claim 1 - 15,
**characterised in that**
the channel (5) is shaped like a thread.

## Revendications

1. Cheville qui se compose de parties de cheville reliées et jointes pour un effet optimum. La cheville comprend le corps de cheville (1) constitué par un matériau gonflable en cas de pression interne et le capuchon (4) qui se trouve à sa tête et qui, par rapport au corps, est constitué par un matériau rigide. A l'intérieur du capuchon (4) Il y a un canal (5) dans lequel une vis de cheville peut être introduite
**caractérisée en ce que**
le capuchon cylindrique (4) constitué par un matériau relativement rigide est attaché au corps de cheville (1) constitué par un matériau plutôt souple de façon à pouvoir être remplacé.

2. Cheville selon la revendication 1,
**caractérisée en ce que**
le corps de cheville (1) et le capuchon (4) sont en matière plastique.

3. Cheville selon la revendication 1 - 2,
**caractérisée en ce que**
le capuchon (4) est, au moins en partie, composé d'un matériau solide.

4. Cheville selon la revendication 1 - 3,
**caractérisée en ce que**
le capuchon cylindrique (4) est composé d'un matériau solide et présente à l'intérieur un canal en forme d'étoile dont la partie supérieure est ouverte.

5. Cheville selon la revendication 1 - 4,
**caractérisée en ce que**
le corps de cheville cylindrique (1) constitué par un matériau souple présente à son extrémité opposée au capuchon (4) un col (2) et/ou un bord saillant qui sert à boucher le trou percé en tant qu'élément de fermeture.

6. Cheville selon la revendication 1 - 5,
**caractérisée en ce que**
le corps de cheville cylindrique (1) composé d'un matériau souple a une forme cylindrique et présente à son extrémité inférieure plus large une plaque circulaire (2) trouée en son centre (2b) dans lequel une vls de cheville peut être introduite.

7. Cheville selon la revendication 6,
**caractérisée en ce que**
la plaque (2) présente un trou axial.

8. Cheville selon la revendication 1 - 7
**caractérisée en ce que**
le corps de cheville cylindrique (1) composé d'un matériau plutôt souple présente des nervures sur sa face externe.

9. Cheville selon la revendication 1- 8,
**caractérisée en ce que**
le corps de cheville (1) composé d'un matériau plutôt souple présente des moulures (6) sur sa face externe.

10. Cheville selon la revendication 9,
**caractérisée en ce qu'**il
s'agit de moulures longitudinales (6).

11. Cheville selon la revendication 9 - 10,
**caractérisée en ce que**
les moulures (6) ont un profil semi-circulaire.

12. Cheville selon la revendication 1 - 11,
**caractérisée en ce que**
le capuchon (4) a une forme cylindrique.

13. Cheville selon la revendication 1 - 11,
**caractérisée en ce que**
le capuchon (4) a la forme d'une pyramide tronquée.

14. Cheville selon la revendication 1 - 13,
**caractérisée en ce que**
le corps de cheville (1) composé d'un matériau plutôt souple a une forme cylindrique.

15. Cheville selon la revendication 1 - 13,
**caractérisée en ce que**
le corps de cheville (1) composé d'un matériau plutôt souple a la forme d'une pyramide tronquée.

16. Cheville selon la revendication 1 - 15,
**caractérisée en ce que**
le canal (5) a la forme d'un pas de vis.
